# EUROPÄISCHE PATENTANMELDUNG

(11) **EP 4 607 172 A1**
(43) Veröffentlichungstag der Anmeldung: **27.08.2025**
(21) Anmeldenummer: 25159305.9
(22) Anmeldetag: 21.02.2025
(51) Int. Cl.: G01M 11/02

(54) **VORRICHTUNG UND VERFAHREN ZUM PRÜFEN EINES ASTIGMATISCHEN OPTISCHEN PRÜFOBJEKTES**

(30) Priorität: 21.02.2024 DE 102024104842
(71) Anmelder: Trioptics GmbH, 22880 Wedel (DE)
(72) Erfinder: BEER, Philipp, Wedel (DE); HINRICHS, Johannes, Wedel (DE); BAYON, Sergio, Wedel (DE); EGGERS, Jan-Hinrich, Wedel (DE)
(74) Vertreter: Waldauf, Alexander

(57) **Zusammenfassung**

Es wird eine Vorrichtung (100) zum Prüfen eines astigmatischen optischen Prüfobjektes (OBJ) vorgestellt. Die Vorrichtung (100) umfasst eine Beleuchtungseinrichtung (110) mit einer Lichtquelle (112) einem ringförmigen Maskenelement (114) und einer Kollimationsoptik (116), wobei die Kollimationsoptik (116) ausgebildet ist, um Lichtstrahlen des von der Lichtquelle (112) beleuchteten, ringförmigen Maskenelements (114) als kollimiertes Prüflicht (122) zu dem Prüfobjekt (OBJ) auszugeben. Die Vorrichtung (100) umfasst auch eine Auswerteeinrichtung (130), die ausgebildet ist, um eine durch das Prüfobjekt (OBJ) ansprechend auf das Prüflicht (122) erzeugte Abbildung (124) aufzunehmen und auszuwerten, um eine Achsenlage des Prüfobjektes (OBJ) sowie einen mit der Achsenlage zusammenhängenden, optischen Parameter zu bestimmen.

## Beschreibung

Die Erfindung betrifft eine Vorrichtung zum Prüfen eines astigmatischen optischen Prüfobjektes, ein Verfahren zum Prüfen eines astigmatischen optischen Prüfobjektes und eine Verwendung eines ringförmigen Maskenelements zum Prüfen eines astigmatischen optischen Prüfobjektes.

Herkömmlicherweise kann zum Beispiel für eine Charakterisierung von Brillengläsern ein manuelles oder automatisiertes Scheitelbrechwertmessgerät (SBM) genutzt werden, wobei jedoch lediglich ein Teil der relevanten optischen Parameter von astigmatischen Brillengläsern gemessen werden kann. Im Falle eines manuellen SBM können Herausforderungen zusätzlich im Hinblick auf Handhabung, Zeit und Genauigkeit gegeben sein, denn eine Bedienperson muss wissen, was genau sie tut, um Beispielsweise eine korrekte sphärisch-zylindrische Glaskombination zu ermitteln, es kann durch manuelle Bedienung zu einer höheren Taktzeit kommen und manuelle SBM können auf Grund ihrer Auflösung von ≥0,125 dpt unter Umständen nicht genau genug sein, wenn es sich um eine exakte Messung des Brechwertes handelt. Die WO 2023/274822 A1 betrifft eine Verwendung eines Ring-Reticles zur richtungsabhängigen Messung einer MTF (MTF = Modulation Transfer Function; Modulationsübertragungsfunktion). Die im Stand der Technik beschriebenen Konzepte zur Brechkraftbestimmung lehren nicht, wie beispielsweise mit Brillengläsern kombinierte Wellenleiter bzw. Waveguides für AR/VR-Anwendungen mit astigmatischen Eigenschaften gemessen werden können oder dass und wie ein Ring-Reticle zu verwenden wäre, um solche Wellenleiter mit korrektiven Eigenschaften zu messen.

Vor diesem Hintergrund werden mit dem hier vorgestellten Ansatz eine verbesserte Vorrichtung zum Prüfen eines astigmatischen optischen Prüfobjektes, ein verbessertes Verfahren zum Prüfen eines astigmatischen optischen Prüfobjektes sowie eine Verwendung eines ringförmigen Maskenelements zum Prüfen eines astigmatischen optischen Prüfobjektes gemäß den Hauptansprüchen vorgestellt. Vorteilhafte Ausgestaltungen und Weiterbildungen der Erfindung ergeben sich aus den nachfolgenden Unteransprüchen.

Gemäß Ausführungsformen kann insbesondere eine Messung optischer Parameter von astigmatischen optischen Prüfobjekten, beispielsweise Brillengläsern für AR/VR-Anwendungen (AR = Augmented Reality; VR = Virtual Reality), unter Verwendung eines auch als Ring-Reticle bezeichenbaren ringförmigen Maskenelements auf vorteilhafte Weise ermöglicht werden.

Es kann beispielsweise eine automatische Detektion der zylindrischen Achse bzw. einer Hauptachse oder Achsenlage bei astigmatischen optischen Prüfobjekten ermöglicht werden.

Es wird eine Vorrichtung zum Prüfen eines astigmatischen optischen Prüfobjektes vorgestellt, wobei die Vorrichtung folgende Merkmale aufweist:
eine Beleuchtungseinrichtung mit einer Lichtquelle, einer Kollimationslinse bzw. Kollimationsoptik und einem ringförmigen Maskenelement, wobei die Beleuchtungseinrichtung ausgebildet ist, um durch das ringförmige Maskenelement hindurchtretendes Licht als kollimiertes Prüflicht zu dem Prüfobjekt auszugeben; und
eine Auswerteeinrichtung, die ausgebildet ist, um eine durch das Prüfobjekt ansprechend auf das Prüflicht erzeugte Abbildung aufzunehmen und auszuwerten, um eine Achsenlage des Prüfobjektes zu bestimmen.

Beispiele für astigmatische optische Prüfobjekte können Linsen, Brillengläser, Korrekturlinsen für NED-Systeme (NED = Near Eye Display), Linsensysteme, mit Brillengläsern kombinierte Waveguides für AR/VR-Anwendungen oder andere optische Elemente sein. Das ringförmige Maskenelement kann auch als Ringmaske, ringförmige Maske oder Ring-Reticle bezeichnet werden. Das Prüfobjekt kann zum Prüfen desselben zwischen der Beleuchtungseinrichtung und der Auswerteeinrichtung angeordnet oder anordenbar sein. Die Achsenlage kann eine Ausrichtung mindestens einer von zwei Hauptachsen des astigmatischen Prüfobjektes repräsentieren. Die Hauptachsen können um 90 Grad versetzt zueinander ausgerichtet sein. Die Auswerteeinrichtung kann eine Kamera oder dergleichen aufweisen oder als eine Kamera oder dergleichen ausgeführt sein.

Gemäß einer Ausführungsform kann die Vorrichtung mindestens eine Bewegungseinrichtung aufweisen, die ausgebildet sein kann, um eine Relativbewegung zwischen dem Prüfobjekt einerseits und der Beleuchtungseinrichtung sowie der Auswerteeinrichtung andererseits, oder von Bestandteilen der Beleuchtungseinrichtung und/oder der Auswerteeinrichtung, zu bewirken. Eine solche Ausführungsform bietet den Vorteil, dass relevante optische Parameter auch in verschiedenen Ausrichtungen bzw. Richtungen gemessen werden können.

Weiterhin kann die Beleuchtungseinrichtung als fokussierbarer Kollimator ausgelegt sein. Das bedeutet, dass das ringförmige Maskenelement bzw. Ring-Reticle relativ zur Brennebene der Kollimationsoptik der Beleuchtungseinrichtung entlang der optischen Achse bewegbar ist. Die Bewegung kann beispielsweise mithilfe eines Motors, z. B. eines Schritt- oder Linearmotors in Kombination mit einem Encoder erfolgen. Dadurch kann das Ring-Reticle auch in eine definierte, endliche Distanz abgebildet werden.

Auch kann die Auswerteeinrichtung ausgebildet sein, um die Abbildung auszuwerten, um eine Modulationsübertragungsfunktion bezüglich der bestimmten Achsenlage und zusätzlich oder alternativ zumindest einen weiteren optischen Parameter des Prüfobjektes zu bestimmen. Eine solche Ausführungsform bietet den Vorteil, dass auch von astigmatischen optischen Prüfobjekten mehrere relevante optische Parameter bzw. Eigenschaften gemessen werden können. Insbesondere bietet eine solche Ausführungsform die Möglichkeit eine Richtungsabhängigkeit optischer Parameter bei astigmatischen Prüflingen im Rahmen der Messung zu berücksichtigen.

Ferner kann die Auswerteeinrichtung ausgebildet sein, um durch das ringförmige Maskenelement und das Prüfobjekt bedingte Ringkonturen der Abbildung auszuwerten, um die Achsenlage anhand eines Maximums der Schärfe entlang der Ringkonturen zu bestimmen. Dabei kann die Auswerteeinrichtung ausgebildet sein, um die Ringkonturen der Abbildung unter Verwendung einer Merkmalserkennung bzw. ellipsoiden Feature-Erkennung auszuwerten. Eine solche Ausführungsform bietet den Vorteil, dass die Achsenlage einfach, genau und zuverlässig bestimmt werden kann.

Zudem kann die Auswerteeinrichtung ausgebildet sein, um durch das ringförmige Maskenelement und das Prüfobjekt bedingte Ringkonturen der Abbildung auszuwerten, um die Achsenlage anhand eines Maximums der Lichtintensität entlang der Ringkonturen zu bestimmen. Eine solche Ausführungsform bietet den Vorteil, dass die Achsenlage unaufwändig, genau und sicher bestimmt werden kann.

Die Auswerteeinrichtung kann als Kamera, z. B. als eine CCD- oder CMOS-Kamera und/oder als Spektral-bzw. Farbkamera realisiert sein und optional über einen variablen Fokus verfügen. Weiterhin kann die Auswerteeinrichtung als eine Kamera mit Teleskop oder als ein Konoskop realisiert sein.

Des Weiteren kann die Auswerteeinrichtung ausgebildet sein, um die Abbildung durch schrittweises Ändern einer Auswerterichtung einer richtungsabhängigen Modulationsübertragungsfunktion auszuwerten, um die Achsenlage anhand eines Maximums der Modulationsübertragungsfunktion zu bestimmen. Eine solche Ausführungsform bietet den Vorteil, dass die Achsenlage exakt und zuverlässig bestimmt werden kann.

Weiterhin kann sowohl die Beleuchtungseinrichtung als auch die Auswerteeinheit in mehrere Raumrichtungen, unabhängig voneinander, bewegbar und/oder um mehrere Achsen schwenkbar sein. Beispielsweise können die Beleuchtungseinrichtung und die Auswerteeinheit jeweils an einem Goniometer befestigt sein.

Es wird auch ein Verfahren zum Prüfen eines astigmatischen optischen Prüfobjektes vorgestellt, wobei das Verfahren folgende Schritte aufweist:
Ausgeben von Licht von einer Lichtquelle einer Beleuchtungseinrichtung durch ein ringförmiges Maskenelement der Beleuchtungseinrichtung in Richtung einer Kollimationslinse bzw. Kollimationsoptik und Ausgeben des kollimierten Lichts als Prüflicht zu dem Prüfobjekt;
Aufnehmen einer durch das Prüfobjekt ansprechend auf das Prüflicht erzeugten Abbildung unter Verwendung einer Auswerteeinrichtung; und
Auswerten der Abbildung unter Verwendung der Auswerteeinrichtung, um eine Achsenlage des Prüfobjektes zu bestimmen.

Das Verfahren ist hierbei mittels oder unter Verwendung einer Ausführungsform einer hierin genannten Vorrichtung zum Prüfen eines astigmatischen optischen Prüfobjektes vorteilhaft ausführbar.

Gemäß einer Ausführungsform kann das Verfahren auch einen Schritt des Bewirkens einer Relativbewegung zwischen dem Prüfobjekt einerseits und der Beleuchtungseinrichtung sowie der Auswerteeinrichtung andererseits, oder von Bestandteilen der Beleuchtungseinrichtung und/oder der Auswerteeinrichtung, unter Verwendung mindestens einer Bewegungseinrichtung aufweisen. Eine solche Ausführungsform bietet den Vorteil, dass relevante optische Parameter auch in verschiedenen Ausrichtungen bzw. Richtungen gemessen werden können.

Dabei können der Schritt des Bewirkens und der Schritt des Aufnehmens iterativ wiederholt ausgeführt werden, um eine Mehrzahl von Abbildungen bei unterschiedlichen Ausrichtungen zwischen dem Prüfobjekt einerseits und der Beleuchtungseinrichtung sowie der Auswerteeinrichtung andererseits aufzunehmen. Hierbei kann im Schritt des Auswertens die Mehrzahl von Abbildungen ausgewertet werden. Eine solche Ausführungsform bietet den Vorteil, dass die Achsenlage exakt und zuverlässig bestimmt werden kann.

Günstig ist somit auch eine Verwendung eines ringförmigen Maskenelements in einer Ausführungsform einer hierin genannten Vorrichtung zum Prüfen eines astigmatischen optischen Prüfobjektes. Das ringförmige Maskenelement bzw. Ring Reticle kann dabei entweder als physisches Objekt realisierbar sein oder als virtuelle Struktur z. B. als eine Darstellung auf einem digitalen Display realisierbar sein.

Ein Ausführungsbeispiel der Erfindung ist in den Zeichnungen rein schematisch dargestellt und wird nachfolgend näher beschrieben. Es zeigt
Fig. 1 eine schematische Darstellung eines Ausführungsbeispiels einer Vorrichtung zum Prüfen eines astigmatischen optischen Prüfobjektes;
Fig. 2 eine schematische Darstellung eines Ausführungsbeispiels einer Vorrichtung zum Prüfen eines astigmatischen optischen Prüfobjektes;
Fig. 3 ein Ablaufdiagramm eines Ausführungsbeispiels eines Verfahrens zum Prüfen eines astigmatischen optischen Prüfobjektes; und
Fig. 4 ein Ablaufdiagramm eines Ausführungsbeispiels eines Prozesses zum Prüfen eines astigmatischen optischen Prüfobjektes.

Bevor nachfolgend detaillierter auf günstige Ausführungsbeispiele der vorliegenden Erfindung eingegangen wird, werden zunächst Hintergründe und Vorteile von Ausführungsbeispielen kurz erläutert.

Produkte des AR-Bereichs und/oder des VR-Bereichs können verschiedene optische Elemente umfassen. Solche Elemente sind beispielsweise Bestandteile moderner AR-Brillen, die im Fertigungsprozess hinsichtlich ihrer Performance charakterisiert werden sollen, um eine akzeptable Qualität des Endproduktes zu bieten. Die Charakterisierung der einzelnen Komponenten wird mit unterschiedlichen Parametern vorgenommen. Für Wellenleiter bzw. Waveguides ist der Parameter MTF (Modulation Transfer Function; Modulationsübertragungsfunktion, Kontrastübertragungsfunktion oder auch Modulationstransferfunktion) oder Effizienz wichtig, für Korrekturlinsen spielt klassischerweise die Brechkraft und Verzeichnung eine entscheidende Rolle. Maschinen, die herkömmlicherweise auf dem Markt angeboten werden, sind lediglich für die Messung einzelner Komponenten und deren spezifischer Parameter entwickelt, wobei nun gemäß Ausführungsbeispielen insbesondere eine Messung aller relevanten zu einer AR/VR-Brille gehörenden Bestandteile ermöglicht wird. Weiterhin ist insbesondere die Abbildungsqualität auch für Korrekturlinsen in AR/VR-Brillen von Bedeutung, wobei es gemäß Ausführungsbeispielen nun insbesondere ermöglicht wird, die klassischen Parameter für Korrekturlinsen mit Methoden für Abbildungsqualität anderer Komponenten zu messen.

Gemäß Ausführungsbeispielen wird beispielsweise eine Messung eines Brillenglases, genauer gesagt astigmatischen Brillenglases, d.h. sphärisch-zylindrische Kombination mit definierter Orientierung der beiden Hauptachsen, unter der Verwendung eines ringförmigen Maskenelements bzw. Ring-Reticles in einer Vorrichtung ermöglicht. Genauer gesagt wird eine Bestimmung der Orientierung der Hauptachsen und anschließende MTF-Messung entlang der entsprechenden Orientierung ermöglicht.

Gemäß Ausführungsbeispielen ist es möglich, in einer bestehenden Vorrichtung zur MTF- und Effizienz-Messung auch beispielsweise astigmatische Brillengläser und andere astigmatische Prüfobjekte zu messen. Mit einem ringförmigen Maskenelement können Messungen der MTF, Effizienz sowie alle relevanten optischen Eigenschaften solcher Prüfobjekte kombiniert werden. Durch ein Ring-Reticle lässt sich die Richtung, in welcher die MTF ausgewertet wird, frei wählen und ist nicht beispielsweise auf die sagittale bzw. tangentiale Ebene beschränkt. Dadurch kann die Messung der Orientierung der Hauptachsen mit einer entsprechenden MTF-Messung kombiniert werden. Somit lassen sich mit einer solchen Vorrichtung auch astigmatische Prüflinge vermessen.

Astigmatische Brillengläser weisen zwei Hauptachsen auf, die jeweils 90 Grad zueinander stehen. Entlang dieser Hauptachsen wirken zwei unterschiedliche Stärken. Eine typische Schreibweise solcher Rezeptgläser wird normalerweise wie folgt ausgedrückt:

| Sph. [dpt] | Cyl. [dpt] | Achse [°] |
|---|---|---|
| -1.00 | -0.50 | 120 |

In diesem Beispiel setzt sich das Glas aus einem sphärischen Anteil von -1.00 dpt und einem astigmatischen (oder zylindrischen) Anteil von -0.5 dpt zusammen. Dabei wirken -1.50dpt in 120 Grad und -1.00dpt in 30 Grad. Ein Ziel von Ausführungsbeispielen ist es insbesondere, das Prüfobjekt hinsichtlich seiner Stärken und der Zylinder-Achse zu messen und am Ende einen Output, beispielsweise ähnlich dem vorstehend genannten Beispiel, auszugeben. Es kann somit eine herkömmliche Prozedur beispielsweise um eine Iteration für die Achsdetektion erweitert werden. Durch die Verwendung eines Ring-Reticles ergeben sich unterschiedliche Optionen einer Detektion, wie es nachfolgend noch detaillierter erläutert wird.

In der nachfolgenden Beschreibung günstiger Ausführungsbeispiele der vorliegenden Erfindung, werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

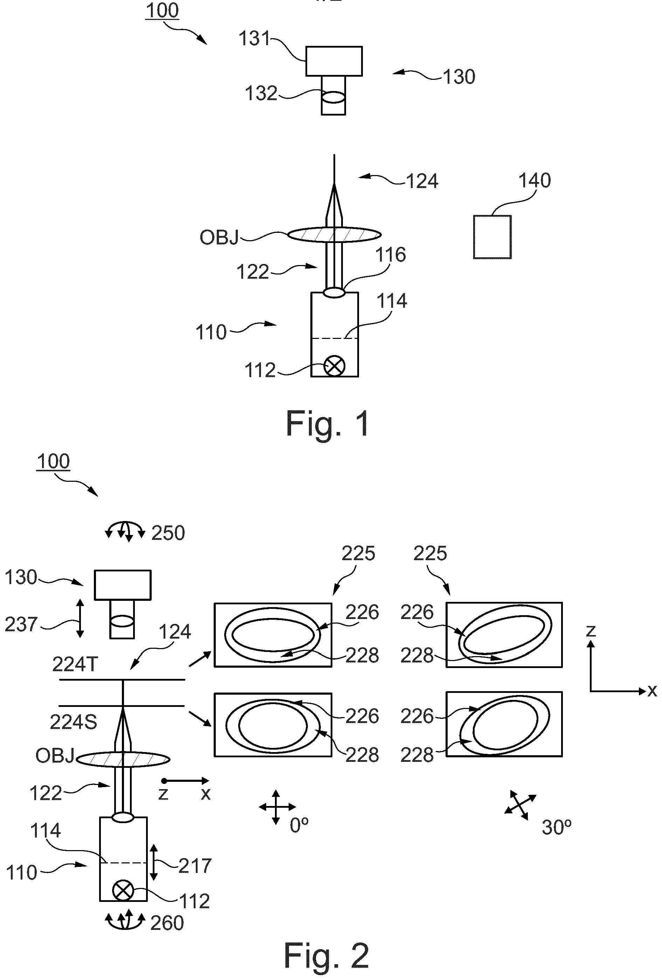

Fig. 1 zeigt eine schematische Darstellung eines Ausführungsbeispiels einer Vorrichtung 100 zum Prüfen eines astigmatischen optischen Prüfobjektes OBJ. Die Vorrichtung 100 ist ausgebildet, um das astigmatische optische Prüfobjekt OBJ zu prüfen, um beispielsweise mehrere relevante optische Parameter zu bestimmen. Bei einem solchen Prüfobjekt OBJ handelt es sich beispielsweise um eine Linse, ein Brillenglas, eine Korrekturlinse für NED-Systeme (NED = Near Eye Display), ein Linsensystem, ein mit einem Brillenglas kombinierter Wellenleiter bzw. Waveguide für AR/VR-Anwendungen oder ein anderes optisches Element. In der Darstellung von Fig. 1 ist das Prüfobjekt OBJ lediglich beispielhaft als eine Linse veranschaulicht.

Die Vorrichtung 100 bzw. Prüfvorrichtung umfasst eine Beleuchtungseinrichtung 110 und eine Auswerteeinrichtung 130. Zwischen der Beleuchtungseinrichtung 110 und der Auswerteeinrichtung 130 ist das Prüfobjekt OBJ zum Prüfen desselben anordenbar oder angeordnet. Die Beleuchtungseinrichtung 110 umfasst eine Lichtquelle 112, ein ringförmiges Maskenelement 114 bzw. ein sogenanntes Ring-Reticle und eine Kollimationsoptik bzw. Kollimationslinse 116. Die Lichtquelle 112 ist dabei ausgebildet, um das ringförmige Maskenelement 114 zu beleuchten und kann beispielsweise als monochromatische oder polychromatische Lichtquelle und weiterhin beispielsweise als Glühlampe oder Weißlicht-LED ausgelegt sein. Optional kann die Lichtquelle in Kombination mit einem optischen Filter, beispielsweise einem V(lambda) oder Photopic-Eye-Filter, verwendet werden. Optional können die Lichtquelle 112 und das Ring-Reticle 114 eine gemeinsame Einheit bilden, beispielsweise in Form eines Displays, welches das Ring-Reticle 114 als virtuelles Objekt bzw. virtuelle Struktur anzeigt. Das ringförmige Maskenelement 114 befindet sich in der Brennebene einer Kollimationslinse bzw. Kollimationsoptik 116 und wird von dieser ins Unendliche abgebildet, sodass das Licht hinter der Kollimationslinse 116 als paralleles bzw. kollimiertes Prüflicht 122 in Richtung des Prüfobjektes OBJ ausgegeben wird. Zusätzlich oder alternativ kann das ringförmige Maskenelement 114 entlang der optischen Achse der Kollimationslinse 116 verfahrbar sein, siehe den Doppelpfeil 217 in Fig. 2, wodurch die ringförmige Struktur des Maskenelements 114 in definierte, endliche Entfernungen abbildbar ist. Dadurch kann ein Fokusscan durchgeführt werden. Die Auswerteeinrichtung 130 ist ausgebildet, um eine durch das Prüfobjekt OBJ ansprechend auf das Prüflicht 122 erzeugte Abbildung 124 aufzunehmen und auszuwerten, um zumindest eine Achsenlage sowie einen damit zusammenhängenden, optischen Parameter, z. B. hinsichtlich der Abbildungsqualität, des Prüfobjektes OBJ zu bestimmen.

Gemäß einem Ausführungsbeispiel ist die Auswerteeinrichtung 130 ausgebildet, um die Abbildung 124 auszuwerten, um eine Modulationsübertragungsfunktion bezüglich der bestimmten Achsenlage und/oder zumindest einen weiteren optischen Parameter des Prüfobjektes OBJ zu bestimmen. Die Auswerteeinrichtung 130 kann weiterhin einen Sensor, z. B. einen CMOS- oder CCD-Sensor 131 und eine Optik 132 umfassen. Die Auswerteeinheit kann zusätzlich als fokussierbares System, z. B. fokussierbare Kamera, ausgelegt sein, wobei durch das Verschieben eines oder mehrerer Elemente, z. B. des Bildsensors, eine Fokussierung einstellbar ist, wie durch den Doppelpfeil 237 in Fig. 2 angedeutet, wodurch eine zusätzliche oder alternative Möglichkeit zur Durchführung eines Fokusscans geboten wird. Die Optik 132 kann beispielsweise als Konoskop oder Teleskop ausgelegt sein. Weiterhin kann die Auswerteeinheit 130 mit einer hier nicht dargestellten Recheneinheit, wie z. B. einem PC, verbunden sein. Die Recheneinheit ist dazu ausgelegt, mithilfe eines Algorithmus, z. B. in Form von Software, aus den von der Auswerteeinheit 130 aufgenommenen Bildern, eine Orientierung der Hauptachsen des Prüfobjektes OBJ sowie damit verbundene, optische Parameter zu bestimmen. Optional zusätzlich umfasst die Vorrichtung 100 gemäß einem Ausführungsbeispiel auch mindestens eine Bewegungseinrichtung 140. Die Bewegungseinrichtung 140 ist ausgebildet, um eine Relativbewegung zwischen dem Prüfobjekt OBJ einerseits und der Beleuchtungseinrichtung 110 sowie der Auswerteeinrichtung 130 andererseits zu bewirken. Dazu ist die Bewegungseinrichtung 140 beispielsweise mit der Beleuchtungseinrichtung 110 und/oder der Auswerteeinrichtung 130, bzw. mit Bestandteilen der Beleuchtungseinrichtung 110 und/oder der Auswerteeinrichtung 130, und/oder einer Halterung für das Prüfobjekt OBJ gekoppelt, auch wenn dies in der schematischen Darstellung nicht explizit gezeigt ist.

Fig. 2 zeigt eine schematische Darstellung eines Ausführungsbeispiels einer Vorrichtung 100 zum Prüfen eines astigmatischen optischen Prüfobjektes OBJ. Die Vorrichtung 100 in Fig. 2 entspricht oder ähnelt hierbei der Vorrichtung zum Prüfen aus Fig. 1.

Somit sind in der Darstellung von Fig. 2 von der Vorrichtung 100 die Beleuchtungseinrichtung 110 mit der Lichtquelle 112, dem ringförmigen Maskenelement bzw. Ring-Reticle 114 und der Kollimationsoptik 116, und die Auswerteeinrichtung 130 sowie ferner ein oberes Goniometer 250 und ein unteres Goniometer 260 gezeigt. Zudem sind in Fig. 2 das Prüflicht 122, das astigmatische optische Prüfobjekt OBJ und die Abbildung 124 dargestellt, wobei hinsichtlich der Abbildung 124 zusätzlich eine tangentiale Brennebene 224T, eine sagittale Brennebene 224S und zur Veranschaulichung beispielhaft vier Ringkonturen 225 der Abbildung 124 mit scharfen Ringkonturen 226 und unscharfen Ringkonturen 228 eingezeichnet sind. Zudem ist eine Achsenlage (sphärisch, zylindrisch) des Prüfobjektes OBJ, beispielsweise eines Brillenglases, veranschaulicht, welche einer Auswerterichtung einer MTF-Messung entspricht. Lediglich beispielhaft sind hier sowohl eine Verkippung der Linsenachse um 0 Grad als auch eine Verkippung der Linsenachse um 30 Grad gezeigt. Die vier Ringkonturen 225 ergeben sich jeweils für die unterschiedlichen Brennebenen 224S und 224T bei den jeweiligen Achslagen bzw. der jeweiligen Verkippung der Linsenachse, hier 0° und 30°.

Gemäß einem Ausführungsbeispiel ist die Auswerteeinrichtung 130 der Vorrichtung 100 ausgebildet, um durch das ringförmige Maskenelement 114 und das Prüfobjekt OBJ bedingte Ringkonturen 225, 226, 228 der Abbildung 124 auszuwerten, um die Achsenlage anhand eines Maximums der Schärfe entlang der Ringkonturen 225, 226, 228 zu bestimmen. Dies stellt eine erste Variante bzw. Verfahrensvariante dar, die auch als Detektion über ellipsoide Feature-Erkennung bezeichnet wird. Bei einem Fokusscan mit einem astigmatischen Brillenglas als Prüfobjekt OBJ verformt sich der durch das Maskenelement 114 definierte Ring in der Abbildung 124 zu einer Ellipse, die wiederum aus zwei Halbachsen besteht. Je weiter sich der sphärische Anteil vom zylindrischen Anteil unterscheidet, desto unschärfer werden die Ringkonturen, siehe die unscharfen Ringkonturen 228, entlang der Halbachsen, während des Fokusscans. Die Stelle mit der schärfsten Ringkontur 226, wo die Anzahl an beleuchteten Pixeln am geringsten ist, gibt so Rückschlüsse auf die Lage einer Halbachse, die mit einer der Hauptachsen des Brillenglases übereinstimmt. Die zweite Hauptachse liegt dann direkt 90° versetzt zur ersten. Die MTF-Auswerterichtung kann dann automatisch auf diese Achse angepasst werden und einen erneuten Fokusscan auslösen.

Gemäß einem Ausführungsbeispiel ist die Auswerteeinrichtung 130 der Vorrichtung ausgebildet, um durch das ringförmige Maskenelement 114 und das Prüfobjekt OBJ bedingte Ringkonturen 225, 226, 228 der Abbildung 124 auszuwerten, um die Achsenlage anhand eines Maximums der Lichtintensität entlang der Ringkonturen 225, 226, 228 zu bestimmen. Dies stellt eine zweite Variante bzw. Verfahrensvariante dar, die auch als Detektion über Intensität bezeichnet wird. Es gehen scharfe Ringkonturen 226 mit einer höheren Lichtintensität einher.

Aus den aufgenommenen Bildern wird hierbei während des Fokusscans eine Intensitätsauswertung entlang des Rings bzw. der Ringkonturen 225, 226, 228 durchgeführt, wodurch auf die Lage der Achsen geschlossen werden kann.

Gemäß einem Ausführungsbeispiel ist die Auswerteeinrichtung 130 der Vorrichtung ausgebildet, um die Abbildung 124 durch schrittweises Ändern einer Auswerterichtung einer richtungsabhängigen Modulationsübertragungsfunktion auszuwerten, um die Achsenlage anhand eines Maximums der Modulationsübertragungsfunktion zu bestimmen. Dies stellt eine dritte Variante bzw. Verfahrensvariante dar, die auch als Detektion über schrittweise Anpassung der MTF-Auswerterichtung bezeichnet wird. Herkömmlicherweise soll die Auswerterichtung einer MTF in entsprechenden Geräteeinstellungen festgelegt werden. Bei der Messung von astigmatischen Brillengläsern bestimmt die Achslage des Zylinders die Auswerterichtung der MTF, welche je nach Zentrierung des Glases zwischen 0 und 180° liegen kann. Gemäß der dritten Variante wird während eines Fokusscans diese Auswerterichtung schrittweise geändert, wobei am Anfang größere Schritte von beispielsweise 10° oder 15° verwendet werden können. Bei jedem aufgenommenen Einzelbild wird dann die MTF entsprechend der Richtung ausgewertet. Nimmt die MTF bei einer Richtungsänderung von beispielsweise 15° zu, wird die Richtung nochmals um 15° geändert bzw. in kleineren Schritten in einem iterativen Prozess verringert, bis die maximale MTF ermittelt wird. Die Auswerterichtung, bei der die höchste MTF gemessen wird, entspricht auch einer der Hauptachsen des Prüflings bzw. Prüfobjekts OBJ. Die zweite Hauptachse ist um 90° zur ersten verdreht. Bei schwach astigmatischen Linsen, kann auf einen Through-Focus Scan, oder vereinfacht gesagt Fokusscan, verzichtet werden und die Lage der Zylinderachse, wie oben beschrieben, anhand eines Einzelbildes erfolgen. Bei stark astigmatischen Linsen ist ein Through-Focus Scan allerdings erforderlich, da die Abbildung des Rings zu unscharf für die Auswertung ist.

Anders ausgedrückt stellt Fig. 2 ebenfalls die grundlegende Idee von Ausführungsbeispielen dar. Die Messung kann entsprechend einer der hierin genannten Verfahrensvarianten bzw. der ersten, zweiten oder dritten Variante erfolgen. Die Abbildung des Ring-Reticles bzw. Maskenelements 114 wird durch die astigmatische Wirkung des Prüflings bzw. Prüfobjektes OBJ zu einer Ellipse bzw. elliptischen Ringkontur 125 verformt. Je nachdem, welche der beiden Fokusebenen 224S oder 224T detektiert wird, verändern sich die Features bzw. Merkmale in den verschiedenen Bereichen der Ellipse. So kann sich z. B. die Anzahl der ausgeleuchteten Pixel, ein Schärfekriterium, oder die gemessene Intensität verändern. Dadurch kann ein Rückschluss gezogen werden, wo die Fokusebenen bzw. die Achsen des Brillenglases bzw. Prüfobjektes OBJ liegen und wie diese im Raum orientiert sind. Mithilfe einer Through-Focus-Messung (Fokusscan), wobei eine Through-Focus-MTF beschreibt, wie die MTF eines optischen Systems sich ändert, wenn sich die Bildebene durch die Fokalregion für eine gewählte Raumfrequenz bzw. Ortsfrequenz bewegt, kann eine Feature-Veränderung über eine Bildserie hinweg beobachtet werden. Der Fokusscan kann dabei mithilfe der mindestens einen Bewegungseinrichtung durchgeführt werden. Diese kann z.B. das Ring-Reticle in der Beleuchtungseinrichtung und/oder den Bildsensor in der Auswerteeinrichtung längs ihrer respektiven, optischen Achse verfahren.

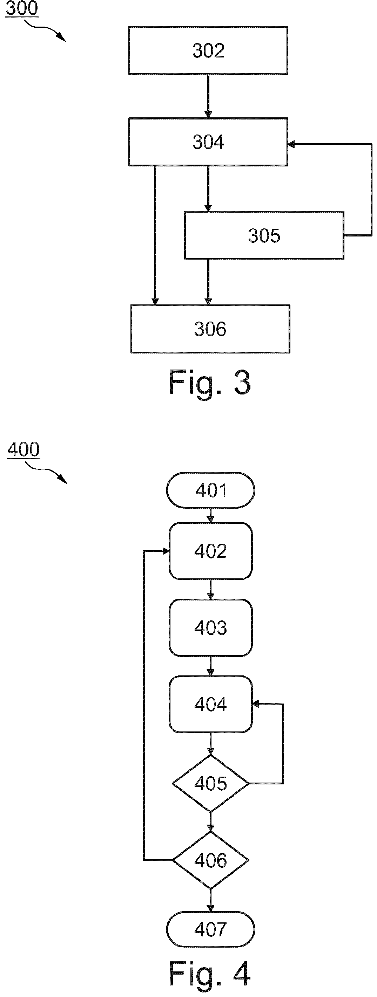

Fig. 3 zeigt ein Ablaufdiagramm eines Ausführungsbeispiels eines Verfahrens 300 zum Prüfen eines astigmatischen optischen Prüfobjektes. Das Verfahren 300 zum Prüfen ist hierbei in Verbindung mit bzw. unter Verwendung der Vorrichtung aus einer der vorstehend beschriebenen Figuren ausführbar. Das Verfahren 300 zum Prüfen umfasst einen Schritt 302 des Ausgebens, einen Schritt 304 des Aufnehmens und einen Schritt 306 des Auswertens.

In dem Schritt 302 des Ausgebens wird kollimiertes Licht von einer Kollimationsoptik einer Beleuchtungseinrichtung, welche über ein beleuchtetes Ring-Reticle, das sich in einer Brennebene der Kollimationsoptik befindet, verfügt als Prüflicht zu dem Prüfobjekt ausgegeben. Nachfolgend wird in dem Schritt 304 des Aufnehmens unter Verwendung einer Auswerteeinrichtung eine durch das Prüfobjekt ansprechend auf das Prüflicht erzeugte Abbildung aufgenommen. Wiederum nachfolgend wird in dem Schritt 306 des Auswertens die Abbildung unter Verwendung der Auswerteeinrichtung ausgewertet, um zumindest eine Achsenlage sowie einen damit zusammenhängenden, optischen Abbildungsparameter des Prüfobjektes zu bestimmen.

Gemäß einem Ausführungsbeispiel umfasst das Verfahren 300 zum Prüfen auch einen Schritt 305 des Bewirkens. In dem Schritt 305 des Bewirkens wird unter Verwendung mindestens einer Bewegungseinrichtung eine Relativbewegung zwischen dem Prüfobjekt einerseits und der Beleuchtungseinrichtung und/oder der Auswerteeinrichtung andererseits, bzw. von Bestandteilen der Beleuchtungseinrichtung und/oder der Auswerteeinrichtung, bewirkt. Gemäß einem weiteren Ausführungsbeispiel werden der Schritt 305 des Bewirkens und der Schritt 304 des Aufnehmens iterativ wiederholt ausgeführt, um eine Mehrzahl von Abbildungen bei unterschiedlichen Ausrichtungen zwischen dem Prüfobjekt einerseits und der Beleuchtungseinrichtung und/oder der Auswerteeinrichtung andererseits aufzunehmen. Hierbei wird nachfolgend im Schritt 306 des Auswertens die Mehrzahl von Abbildungen ausgewertet.

Fig. 4 zeigt ein Ablaufdiagramm eines Ausführungsbeispiels eines Prozesses 400 zum Prüfen eines astigmatischen, optischen Prüfobjektes. Der Prozess 400 steht in Zusammenhang mit dem Verfahren zum Prüfen aus Fig. 3 oder einem ähnlichen Verfahren. In Fig. 4 ist anders ausgedrückt eine iterative Messung der Lage der Hauptachsen oder kurz Achslage eines Prüfobjektes zusammen mit der MTF dargestellt. Die Achslage bzw. Achsenlage des Prüfobjektes wird hierbei gemäß der vorstehend genannten dritten Variante bestimmt.

In einem Block 401 erfolgt ein Start des Prozesses 400. In einem nachfolgenden Block 402 erfolgt eine Bildaufnahme entsprechend oder ähnlich dem Verfahren aus Fig. 3. In einem nachfolgenden Block 403 erfolgt eine MTF-Messung. In einem nachfolgenden Block 404 wird eine Auswerterichtung um +/- x angepasst. In einem nachfolgenden Entscheidungsblock 405 wird überprüft, ob die MTF einen maximalen Wert aufweist. Falls dem so ist, geht der Prozess 400 zu einem weiteren Entscheidungsblock 406 über, in dem überprüft wird, ob der Fokusscan fertig ist. Falls dem so ist, endet der Prozess 400 bei einem Block 407. Falls in dem Entscheidungsblock 405 ermittelt wird, dass die MTF keinen maximalen Wert aufweist, springt die Ausführung zu dem Block 404 zurück, bei dem die Auswerterichtung um +/- x angepasst wird. Falls in dem weiteren Entscheidungsblock 406 ermittelt wird, dass der Fokusscan nicht fertig ist, springt die Ausführung zu dem Block 402 zurück, bei dem die Bildaufnahme erfolgt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (100) zum Prüfen eines astigmatischen optischen Prüfobjektes (OBJ), wobei die Vorrichtung (100) folgende Merkmale aufweist:
eine Beleuchtungseinrichtung (110) mit einer Lichtquelle (112), einem ringförmigen Maskenelement (114) und einer Kollimationsoptik (116), wobei die Kollimationsoptik (116) ausgebildet ist, um Lichtstrahlen des von der Lichtquelle (112) beleuchteten, ringförmigen Maskenelements (114)als kollimiertes Prüflicht (122) zu dem Prüfobjekt (OBJ) auszugeben; und
eine Auswerteeinrichtung (130), die ausgebildet ist, um eine durch das Prüfobjekt (OBJ) ansprechend auf das Prüflicht (122) erzeugte Abbildung (124) aufzunehmen und auszuwerten, um eine Achsenlage des Prüfobjektes (OBJ) sowie einen mit der Achsenlage zusammenhängenden, optischen Parameter zu bestimmen.

2. Vorrichtung (100) gemäß Anspruch 1, mit mindestens einer Bewegungseinrichtung (140), die ausgebildet ist, um eine Relativbewegung zwischen dem Prüfobjekt (OBJ) einerseits und der Beleuchtungseinrichtung (110) und/oder der Auswerteeinrichtung (130) andererseits, bzw. von Bestandteilen der Beleuchtungseinrichtung und/oder der Auswerteeinrichtung, zu bewirken.

3. Vorrichtung (100) gemäß einem der vorangegangenen Ansprüche, wobei die Auswerteeinrichtung (130) ausgebildet ist, um die Abbildung (124) auszuwerten, um eine Modulationsübertragungsfunktion bezüglich der bestimmten Achsenlage und/oder zumindest einen weiteren optischen Parameter des Prüfobjektes (OBJ) zu bestimmen.

4. Vorrichtung (100) gemäß einem der vorangegangenen Ansprüche, wobei die Auswerteeinrichtung (130) ausgebildet ist, um durch das ringförmige Maskenelement (114) und das Prüfobjekt (OBJ) bedingte Ringkonturen (225, 226, 228) der Abbildung (124) auszuwerten, um die Achsenlage anhand eines Maximums der Schärfe entlang der Ringkonturen (225, 226, 228) zu bestimmen.

5. Vorrichtung (100) gemäß einem der vorangegangenen Ansprüche, wobei die Auswerteeinrichtung (130) ausgebildet ist, um durch das ringförmige Maskenelement (114) und das Prüfobjekt (OBJ) bedingte Ringkonturen (225, 226, 228) der Abbildung (124) auszuwerten, um die Achsenlage anhand eines Maximums der Lichtintensität entlang der Ringkonturen (225, 226, 228) zu bestimmen.

6. Vorrichtung (100) gemäß einem der vorangegangenen Ansprüche, wobei die Auswerteeinrichtung (130) ausgebildet ist, um die Abbildung (124) durch schrittweises Ändern einer Auswerterichtung einer richtungsabhängigen Modulationsübertragungsfunktion auszuwerten, um die Achsenlage anhand eines Maximums der Modulationsübertragungsfunktion zu bestimmen.

7. Verfahren (300) zum Prüfen eines astigmatischen optischen Prüfobjektes (OBJ), wobei das Verfahren (300) folgende Schritte aufweist:
Ausgeben (302) von kollimiertem Licht von einer Kollimationsoptik (116) einer Beleuchtungseinrichtung (110), welche über ein, sich näherungsweise in einer Brennebene der Kollimationsoptik (116) befindendes, von einer Lichtquelle (112) beleuchtbares ringförmiges Maskenelement verfügt, als Prüflicht (122) zu dem Prüfobjekt (OBJ);
Aufnehmen (304) einer durch das Prüfobjekt (OBJ) ansprechend auf das Prüflicht (122) erzeugten Abbildung (124) unter Verwendung einer Auswerteeinrichtung (130); und
Auswerten (306) der Abbildung (124) unter Verwendung der Auswerteeinrichtung (130), um eine Achsenlage des Prüfobjektes (OBJ) sowie einen mit der Achsenlage zusammenhängenden, optischen Parameter zu bestimmen.

8. Verfahren (300) gemäß Anspruch 7, mit einem Schritt (305) des Bewirkens einer Relativbewegung zwischen dem Prüfobjekt (OBJ) einerseits und der Beleuchtungseinrichtung (110) und/oder der Auswerteeinrichtung (130) andererseits, bzw. von Bestandteilen der Beleuchtungseinrichtung (110) und/oder der Auswerteeinrichtung (130), unter Verwendung mindestens einer Bewegungseinrichtung (140).

9. Verfahren (300) gemäß Anspruch 8, wobei der Schritt (305) des Bewirkens und der Schritt des Aufnehmens (304) iterativ wiederholt ausgeführt werden, um eine Mehrzahl von Abbildungen (124) bei unterschiedlichen Ausrichtungen zwischen dem Prüfobjekt (OBJ) einerseits und der Beleuchtungseinrichtung (110) sowie der Auswerteeinrichtung (130) andererseits aufzunehmen, wobei im Schritt (306) des Auswertens die Mehrzahl von Abbildungen (124) ausgewertet wird.

10. Verwendung eines ringförmigen Maskenelements (114) in einer Vorrichtung (100) zum Prüfen eines astigmatischen optischen Prüfobjektes (OBJ) gemäß einem der Ansprüche 1 bis 6.
